# EUROPÄISCHE PATENTANMELDUNG

(11) **EP 3 444 018 A1**
(43) Veröffentlichungstag der Anmeldung: **20.02.2019**
(21) Anmeldenummer: 18170072.5
(22) Anmeldetag: 30.04.2018
(51) Int. Cl.: B01D 46/02, B01D 46/06

(54) **STÜTZKORB FÜR EINE FILTERTASCHE**

(30) Priorität: 16.08.2017 DE 102017214232
(71) Anmelder: Benninghoven GmbH & Co. KG, 54516 Wittlich (DE)
(72) Erfinder: Wagner, Frank, 54492 Zeltingen-Rachtig (DE)
(74) Vertreter: Rau, Schneck & Hübner Patentanwälte Rechtsanwälte PartGmbB

(57) **Zusammenfassung**

Ein Stützkorb (6) für eine Filtertasche (5) in einer Entstaubungsanlage (1) ist aus einem Kunststoffmaterial hergestellt.

## Beschreibung

Der Inhalt der deutschen Patentanmeldung DE 10 2017 214 232.4 wird durch Bezugnahme hierin aufgenommen.

Die Erfindung betrifft einen Stützkorb für eine Filtertasche, insbesondere in einer Entstaubungsanlage.

In einer Entstaubungsanlage werden Filtertaschen zum Filtern von staubartigen Partikeln aus einer Abluft, insbesondere aus einem Drehrohrofen, eingesetzt. Um zu vermeiden, dass die Filtertaschen undefiniert in sich zusammenfallen, kann in einer Filtertasche ein Stützkorb angeordnet sein.

Der Erfindung liegt die Aufgabe zugrunde, einen Stützkorb für eine Filtertasche zu verbessern.

Die Aufgabe wird durch die Merkmale des Anspruchs 1 gelöst. Der Kern der Erfindung besteht darin, dass der Stützkorb aus einem Kunststoffmaterial hergestellt ist. Insbesondere ist der Stützkorb aus einem, im Wesentlichen endlosen, Kunststoff-Strang-Profil hergestellt. Der Stützkorb kann auf eine erforderliche Länge abgelängt werden. Es ist grundsätzlich auch denkbar, dass der Stützkorb durch ein alternatives Fertigungsverfahren, insbesondere durch Kunststoff-Spritzguss, hergestellt wird. Erfindungsgemäß wurde gefunden, dass der Stützkorb aus Kunststoffmaterial die erforderlichen Materialanforderungen erfüllt und gegenüber metallischen Stützkörben gemäß dem Stand der Technik mehrere Vorteile aufweist. Die Formgebung bei der Herstellung des Stützkorbes aus einem Kunststoffmaterial ist vereinfacht. Insbesondere kann die Geometrie flexibel festgelegt werden. Dadurch ist die Montage der Filtertasche mit eingesetztem Stützkorb erleichtert. Die Montage wird typischerweise von Hand durch einen Menschen durchgeführt. Der erfindungsgemäße Stützkorb aus dem Kunststoffmaterial weist ein reduziertes Gewicht auf, ist korrosionsbeständig und insbesondere auch beständig gegenüber basischen oder säurehaltigen Umgebungsbedingungen. Die Herstellung des Stützkorbes aus dem Kunststoffmaterial ist unaufwendig und daher kostenreduziert. Aufgrund der höheren Flexibilität bei der Formgestaltung des Stützkorbes können maßgeschneiderte Strukturen realisiert werden. Formelemente können einstückig am Stützkorb angeformt werden. Die Herstellung des Stützkorbes aus dem Kunststoffmaterial kann bedarfsangepasst, beanspruchungsgenau und/oder materialoptimiert erfolgen. Insbesondere ist der Materialeinsatz bei dem erfindungsgemäßen Stützkorb gegenüber einem metallischen Stützkorb aus dem Stand der Technik reduziert, sodass das Aufheizverhalten des erfindungsgemäßen Stützkorbes gegenüber einem metallischen Stützkorb aus dem Stand der Technik reduziert ist, obwohl die Wärmekapazität des Kunststoffmaterials kleiner ist als die des Metallwerkstoffs. Erfindungsgemäß wurde gefunden, dass Querstreben zur Stabilisierung, die bei metallischen Stützkörben gemäß dem Stand der Technik in Längsrichtung in regelmäßigen Abständen angeordnet sind, bei dem Stützkorb aus Kunststoffmaterial entbehrlich sind. Dadurch ist der Materialeinsatz für den erfindungsgemäßen Stützkorb aus Kunststoffmaterial gegenüber einem metallischen Stützkorb gemäß dem Stand der Technik reduziert. Infolge des reduzierten Materialeinsatzes ist das Aufheizverhalten des erfindungsgemäßen Stützkorbes reduziert. Dadurch, dass Querstreben bei dem erfindungsgemäßen Stützkorb entbehrlich sind, ist das Gewicht des Stützkorbes reduziert. Zudem wird verhindert, dass sich das Filtertuch bereits nach geringer Betriebszeit an dieser Querstrebe anlegt. Die Querstrebe ist quer und insbesondere senkrecht zur Einschub- und Auszugsrichtung des Stützkorbes in das Filtertuch orientiert. Dadurch, dass die Querstrebe bei dem erfindungsgemäßen Stützkorb entbehrlich ist, ist das Einführen und insbesondere das Entnehmen des Stützkorbes aus der Filtertasche vereinfacht. Insbesondere kann der Stützkorb ohne Querstreben durch eine einzige Bedienperson aus der Filtertasche entnommen werden. Eine zusätzliche Person, die die Filtertasche im Bodenbereich festhält, um das Herausziehen des Stützkorbes zu vereinfachen, ist entbehrlich. Der Arbeitsaufwand für die Handhabung des Stützkorbes ist reduziert. Das Risiko, dass sich an dem Stützkorb Kondensat bildet, ist reduziert. Der Stützkorb ist insbesondere einteilig ausgeführt.

Ein Stützkorb gemäß Anspruch 2 weist besonders vorteilhafte Materialeigenschaften auf. Ein thermoplastisches Kunststoffmaterial ist vorteilhaft, insbesondere durch Strangpressen und/oder Spritzgussverfahren verarbeitbar. Insbesondere wird ein thermoplastisches Polymermaterial und insbesondere Polyphenylensulfid (PPS) verwendet. PPS weist einen geringen thermischen Ausdehnungskoeffizienten von 0,5 10⁻⁴ K⁻¹ auf. Die Wasseraufnahme von höchstens 0,05 % verhindert zuverlässig eine Interaktion des Kunststoffmaterials mit möglicherweise anfallendem Kondensat. PPS ist sehr gut chemisch beständig gegen verschiedene Kraftstoffe, Öle, Ethanol, Frigen und Xylol. PPS ist ein teilkristalliner Hochleistungskunststoff. Durch die Verbindung aromatischer Monomereinheiten über Schwefelatome entstehen besonders widerstandsfähige Polymere, deren gute mechanische Eigenschaften auch bei Temperaturen weit über 200 °C erhalten bleiben, so dass ein Dauereinsatz je nach Belastung bis 240 °C möglich ist. Kurzzeitig werden auch Belastungen bei Temperaturen bis zu 270 °C standgehalten. Die chemische Beständigkeit von PPS gilt gegenüber nahezu allen Lösemitteln, vielen Säuren und Laugen sowie bedingt gegen Luftsauerstoff auch bei hohen Temperaturen. PPS verfügt neben einer geringen Wasseraufnahme auch über eine gute Dimensionsstabilität und inhärente Flammwidrigkeit. Es hat hervorragende elektrische Eigenschaften, dient insbesondere als Isolator, ist für die meisten Flüssigkeiten und Gase hochgradig undurchlässig, also impermeabel, hat auch bei höheren Temperaturen nur eine geringe Kriechneigung und ist aufgrund seines guten Fließvermögens auch für lange, schmale Formteile und komplexe Werkzeuggeometrien geeignet.

Weitere mögliche Kunststoffmaterialien sind faserverstärkte Kunststoffe, insbesondere faserverstärkte thermoplastische Kunststoffe. Als Fasern kommen Glasfasern und/oder Karbonfasern in Betracht. Vorteilhaft ist es, wenn das Kunststoffmaterial, also die Kunststoffmatrix, bis zu einer Temperatur von mindestens 200° C temperaturstabil ist. Vorteilhaft ist zudem, wenn das Kunststoffmaterial gegenüber Säuren und Laugen resistent ist.

Ein Stützkorb gemäß Anspruch 3 ist besonders leichtbauend ausgeführt.

Ein Stützkorb gemäß Anspruch 4 ist ausreichend temperaturbeständig.

Ein Stützkorb gemäß Anspruch 5 weist eine hohe Steifigkeit auf.

Ein Stützkorb gemäß Anspruch 6 ermöglicht eine besonders kosteneffiziente Herstellung, insbesondere bei großen Stückzahlen. Insbesondere für den Fall, dass ein Querschnittsprofil des Stützkorbes entlang einer Längsachse unveränderlich ausgeführt ist, kann der Stützkorb durch Strangpressen eines sogenannten Endlosprofils hergestellt werden, wobei die einzelnen Stützkörbe aus dem Endlosprofil entsprechend abgelängt werden.

Ein Stützkorb gemäß Anspruch 7 weist eine vorteilhafte, innere Stützstruktur auf. Mindestens eine Stützrippe erstreckt sich entlang der Längsachse, insbesondere über die Gesamtlänge des Stützkorbes. Die mindestens eine Stützrippe garantiert ein Aufspannen der Filtertasche mit dem gewünschten Volumen.

Ein Stützkorb gemäß Anspruch 8 ist mechanisch robust ausgeführt. Die mindestens eine Stützrippe ist insbesondere einstückig an der Tragplatte angeformt. Sofern mehrere Stützrippen vorgesehen sind, sind diese beabstandet voneinander angeordnet. In einer Schnittebene senkrecht zur Längsachse weist der Stützkorb eine offene Fachwerkstruktur, insbesondere eine fischgrätenartige Struktur auf, mit der im Wesentlichen mittig angeordneten Tragplatte und davon ausgehend sich erstreckende Stützrippen.

Die Ausführung eines Stützkorbes gemäß Anspruch 9 ermöglicht eine große Gestaltungsvielfalt, insbesondere bezüglich der Anordnung der mindestens einen Stützrippe an der Tragplatte.

Der Stützkorb gemäß Anspruch 10 ermöglicht ein zuverlässiges und materialschonendes Stützen der Filtertasche. Eine freie Stützkante der Stützrippe ist insbesondere gratfrei und insbesondere ohne materialgefährdende Vorsprünge ausgeführt. Auch ein mehrmaliges Einführen des Stützkorbes in die Filtertasche und ein Entnehmen des Stützkorbes aus der Filtertasche führt nicht zu einer Beschädigung der Filtertasche.

Ein Stützkorb gemäß Anspruch 11 ist besonders materialschonend ausgeführt. Dadurch, dass ein Mindest-Rundungsradius an der freien Stützkante eingehalten wird, ist eine unerwünschte scharfkantige Ausführung des Stützkorbes ausgeschlossen. Der Mindest-Rundungsradius entspricht typischerweise der halben Wanddicke der Stützrippe. Für den Fall, dass die Wandstärke der Stützrippe derart klein ist, dass der Mindest-Rundungsradius nicht eingehalten werden könnte, kann der Mindest-Rundungsradius auch größer sein als die Hälfte der Wandstärke der Stützrippe. In diesem Fall weist die freie Stützkante eine Verdickung auf, die sich insbesondere in Form eines Zylinders parallel zur Längsachse erstreckt. Der Zylinderradius ist mindestens so groß wie der Mindest-Rundungsradius und der Zylinderradius ist größer als die halbe Wandstärke der Stützrippe.

Weitere vorteilhafte Ausgestaltungen, zusätzliche Merkmale und Einzelheiten der Erfindung ergeben sich aus der nachfolgenden Beschreibung von zwei Ausführungsbeispielen anhand der Zeichnung. Es zeigen:
- Fig. 1: einen schematischen Längsschnitt einer durch einen Stützkorb gestützten Filtertasche in einer Entstaubungsanlage,
- Fig. 2: eine Schnittdarstellung gemäß Schnittlinie II-II in Fig. 1,
- Fig. 3: eine perspektivische Ansicht eines Stützkorbes gemäß einem zweiten Ausführungsbeispiel,
- Fig. 4: eine Draufsicht des Stützkorbes gemäß Fig. 3 und
- Fig. 5: eine Frontansicht des Stützkorbes gemäß Fig. 3.

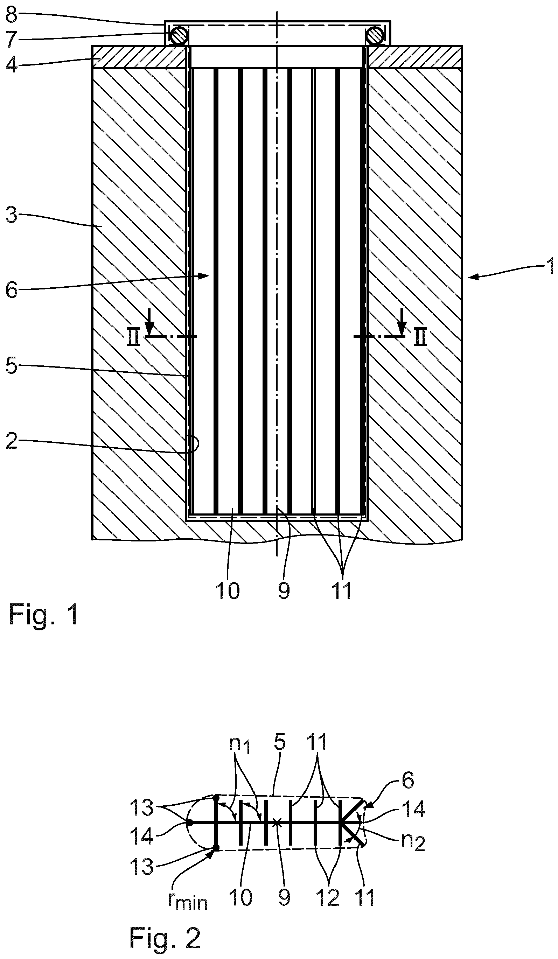

Eine in Fig. 1 schematisch dargestellte Entstaubungsanlage ist beispielsweise Bestandteil einer Anlage zur Herstellung von Asphalt. Die Entstaubungsanlage 1 dient beispielsweise zum Filtern von Abgas, beispielsweise aus einem Drehrohrofen der Anlage zur Herstellung von Asphalt. Die Entstaubungsanlage 1 weist mehrere Schächte 2, sogenannte Slots, auf, die eine ovale Kontur aufweisen. Die Schächte 2 sind in einem Gehäuse 3 der Entstaubungsanlage angeordnet. An einer Außenseite des Gehäuses 3 ist eine Frontplatte 4 angeordnet.

In den Schacht 2 ist eine Filtertasche 5 eingesetzt, in der ein Stützkorb 6 eingesteckt ist. Der Stützkorb 6 dient zum Stützen der Filtertasche 5, die aus einem, insbesondere textilen und insbesondere luftdurchlässigen Material hergestellt ist. Die Filtertasche 5 weist keine Eigenstabilität auf, würde also infolge ihres Eigengewichts nicht volumenfüllend in dem Schacht 2 angeordnet sein können, wenn der Stützkorb 6 die Filtertasche 5 nicht stützen würde.

Die Filtertasche 5 weist eine Anlagefläche zum Anlegen an der Außenseite der Entstaubungsanlage 1 auf, insbesondere zum Anlegen an der äußeren Oberfläche der Frontplatte 4. Die Anlagefläche wird durch eine Rundschnur 7 gebildet, die insbesondere in die Filtertasche 5 eingenäht ist. Dadurch ist die Position der Rundschnur entlang der äußeren Kontur der Filtertasche 5 festgelegt.

Mittels eines Mundstücks 8, das insbesondere aus Edelstahl hergestellt ist, wird die Filtertasche 5 mittels der eingenähten Rundschnur 7 gegen die Frontplatte 4 der Entstaubungsanlage 1 gedrückt und dadurch eine definierte, abgedichtete Anlagefläche für die Filtertasche 5 an der Entstaubungsanlage 1 geschaffen. Das Mundstück 8 ist gemäß dem gezeigten Ausführungsbeispiel fest mit dem Stützkorb 6 verbunden. Es ist alternativ möglich, das Mundstück 8 als Einzelteil herzustellen und beispielsweise eine Klemmvorrichtung vorzusehen, um das Mundstück 8 lösbar mit dem Stützkorb 6 zu verbinden.

Nachfolgend wird der Stützkorb 6, insbesondere dessen Geometrie, anhand von Fig. 2 näher erläutert. Der Stützkorb 6 ist aus Polyphenylensulfid (PPS) durch Strangpressen hergestellt. Der Stützkorb 6 weist eine Längsachse 9 auf, die insbesondere entlang der Einschubrichtung des Schachts 2 in der Entstaubungsanlage 1 orientiert ist. In der senkrecht zur Längsachse 9 orientierten Schnittebene gemäß Fig. 2 weist der Stützkorb 6 eine im Wesentlichen fischgrätenähnliche Struktur auf.

An einer zentral angeordneten Tragplatte 10 sind mehrere, insgesamt vierzehn Stützrippen 11 einstückig angeformt. Die Stützrippen 11 schließen mit der Tragplatte 10 jeweils einen Neigungswinkel n₁, der zwischen -90° und +90° beträgt. Gemäß dem gezeigten Ausführungsbeispiel betragen die meisten Neigungswinkel n₁ 90°. Es sind aber auch mit einem abweichenden Neigungswinkel n₂ angelenkte Stützrippen 11 vorgesehen. Der Neigungswinkel n₂ beträgt etwa 45°. Die Stützrippen 11 sind bezüglich der Tragplatte 10 spiegelsymmetrisch angeordnet. Es sind auch unsymmetrisch angeordnete Stützrippenkonfigurationen möglich. Jede Stützkante 11 weist eine freie Stützkante 12 auf. Die Stützrippen 11 erstrecken sich entlang der Längsachse 9 und sind insbesondere parallel zur Längsachse 9 orientiert. Entsprechend sind die freien Stützkanten 12 parallel zur Längsachse 9 orientiert.

Die freien Stützkanten 12 der Stützrippen 11 weisen einen äußeren Mindest-Rundungsradius rₘᵢₙ auf, der eine Beschädigung der Filtertasche beim Einschieben des Stützkorbes vermeiden soll. Der Mindest-Rundungsradius rₘᵢₙ entspricht im einfachsten Fall der halben Wandstärke der Stützrippe 11. Sofern die Wandstärke der Stützrippe 11 derart klein ausgeführt ist, dass die halbe Wandstärke den Mindest-Rundungsradius unterschreiten würde, ist an der freien Stützkante 12 eine zusätzliche Verdickung 13 vorgesehen sein, um den Mindest-Rundungsradius rₘᵢₙ zu gewährleisten. Bei dem gezeigten Ausführungsbeispiel in Fig. 2 sind die beiden links dargestellten Stützrippen 11 an den freien Stützkanten 12 jeweils mit einer Verdickung 13 ausgeführt. Die weiteren Stützrippen 11 weisen eine ausreichende Wandstärke auf, sodass Verdickungen entbehrlich sind.

Die Tragplatte 10 ist im Wesentlichen rechteckig ausgeführt. Die beiden parallel zur Längsachse 9 orientierten freien Längskanten 14 dienen als zusätzliche freie Stützkanten, die bei Bedarf mit Verdickungen 13 ausgeführt sein können.

Der erfindungsgemäße Stützkorb 6 bildet eine mechanisch robuste und kostengünstige Stützstruktur, mit mehreren freien Stützkanten 12, 14. Eine imaginäre Kontur, die sich durch Verbindung der freien Stützkanten 12, 14 ergibt, bildet ein Stützvolumen für die Filtertasche 5, das der Stützkorb 6 aufspannt.

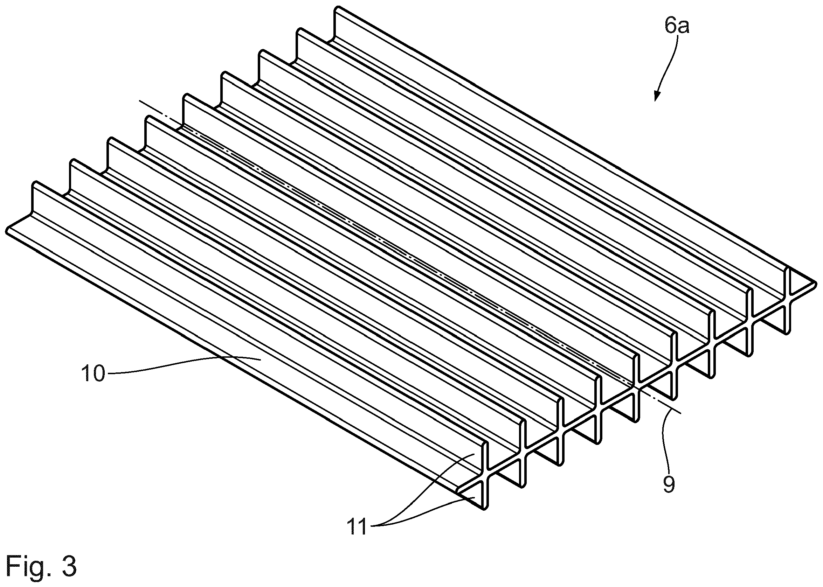

Im Folgenden wird unter Bezugnahme auf Fig. 3 bis 5 ein zweites Ausführungsbeispiel der Erfindung beschrieben. Konstruktiv identische Teile haben dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

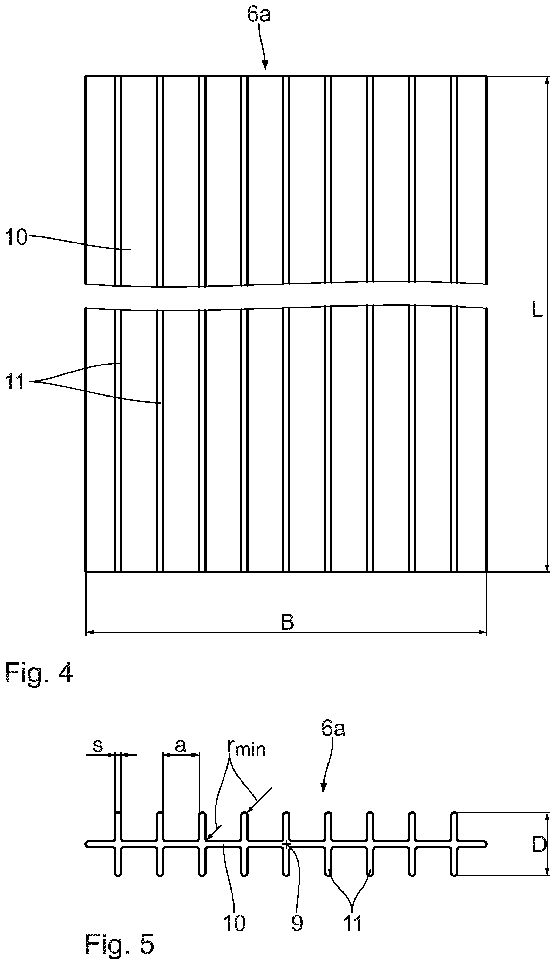

Der wesentliche Unterschied des Stützkorbes 6a gegenüber dem ersten Ausführungsbeispiel besteht hinsichtlich seiner Geometrie, insbesondere der Anzahl und der Anordnung der Stützrippen 11. Die insgesamt achtzehn Stützrippen 11 sind regelmäßig, rasterartig an der Tragplatte 10 angeordnet. Die in Fig. 5 gezeigte Frontansicht zeigt eine offene Fachwerkstruktur, insbesondere in Form einer regelmäßigen Kreuzstruktur. Die Stützrippen 11 erstrecken sich jeweils in einem 90°-Winkel von der Tragplatte 10. Spitze Winkel sind nicht vorgesehen.

Die Stützrippen 11 sind mit einem regelmäßigen Rasterabstand a angeordnet, der gemäß dem gezeigten Ausführungsbeispiel 18 mm beträgt. Der Rasterabstand kann in Abhängigkeit der Filtertaschengröße und des konkreten Einsatzfeldes auch größer oder kleiner als 18 mm festgelegt werden, insbesondere in einem Bereich zwischen 5 mm und 50 mm, insbesondere zwischen 8 mm und 40 mm, insbesondere zwischen 10 mm und 30 mm und insbesondere zwischen 15 mm und 25 mm. Die Stützrippen 11 sind identisch ausgeführt und weisen eine Wandstärke s auf, die gemäß dem gezeigten Ausführungsbeispiel 3 mm beträgt. Die Wandstärke s liegt insbesondere in einem Bereich zwischen 0,5 mm und 8 mm, insbesondere zwischen 1 mm und 5 mm und insbesondere zwischen 2 mm und 4 mm. Der Mindest-Rundungsradius rₘᵢₙ für die Filtertasche beträgt gemäß diesem Ausführungsbeispiel 1,5 mm, also die Hälfte der Wandstärke s. Eine Verdickung an den freien Stützkanten 12 der Stützrippen 11 und 14 der Tragplatte 10 sind entbehrlich.

In einem Übergangsbereich, in dem die Stützrippen 11 einteilig an der Tragplatte 10 befestigt sind, ist eine Abrundung vorgesehen, die mit dem Mindest-Rundungsradius rₘᵢₙ ausgeführt ist. Die Abrundung im Nutgrund des Stützkorbes 6a kann auch kleiner oder größer als der Mindest-Rundungsradius ausgeführt sein.

Durch die an der Tragplatte 10 gegenüberliegend angeordneten Stützrippen 11 weist der Stützkorb 6a eine Dicke D auf, die im Wesentlichen der doppelten Länge der Stützrippen 11 entspricht. Gemäß dem gezeigten Ausführungsbeispiel beträgt die Dicke D 32 mm. Die Dicke D liegt insbesondere zwischen 10 mm und 100 mm, insbesondere zwischen 15 mm und 80 mm, insbesondere zwischen 20 mm und 50 mm, insbesondere zwischen 25 mm und 40 mm.

Der Stützkorb 6a weist eine Breite B auf, die gemäß dem gezeigten Ausführungsbeispiel 200 mm beträgt. Die Breite B liegt insbesondere in einem Bereich zwischen 50 mm und 500 mm, insbesondere zwischen 80 mm und 400 mm, insbesondere zwischen 100 mm und 300 mm, insbesondere zwischen 150 mm und 250 mm. Dadurch, dass der Stützkorb 6a insbesondere durch Strangpressen hergestellt wird, kann die Länge L des Stützkorbes veränderlich festgelegt werden. Dies ist durch die unterbrochene Darstellung des Stützkorbes 6a in Fig. 4 angedeutet.

## Patentansprüche

1. Stützkorb für eine Filtertasche (5) in einer Entstaubungsanlage (1), wobei der Stützkorb (6; 6a) aus einem Kunststoffmaterial hergestellt ist.

2. Stützkorb gemäß Anspruch 1, **dadurch gekennzeichnet, dass** das Kunststoffmaterial ein thermoplastisches Kunststoffmaterial, insbesondere ein thermoplastisches Polymermaterial und insbesondere Polyphenylensulfid (PPS) aufweist.

3. Stützkorb gemäß einem der vorstehenden Ansprüche, **dadurch gekennzeichnet, dass** das Kunststoffmaterial eine Dichte von weniger als 2,0 g/cm, insbesondere von weniger als 1,5 g/cm³ und insbesondere von höchstens 1,35 g/cm aufweist.

4. Stützkorb gemäß einem der vorstehenden Ansprüche, **dadurch gekennzeichnet, dass** das Kunststoffmaterial eine Schmelztemperatur von mehr als 250°C, insbesondere von mehr als 270°C, insbesondere von mehr als 280°C und insbesondere von etwa 285°C aufweist.

5. Stützkorb gemäß einem der vorstehenden Ansprüche, **dadurch gekennzeichnet, dass** das Kunststoffmaterial einen Elastizitätsmodul von mindestens 3500 N/mm², insbesondere mindestens 3800 N/mm² und insbesondere mindestens 4000 N/mm².

6. Stützkorb gemäß einem der vorstehenden Ansprüche, **gekennzeichnet durch** eine Längsachse (9), wobei ein Querschnittsprofil des Stützkorbes (6; 6a) entlang der Längsachse (9) insbesondere unveränderlich ist.

7. Stützkorb gemäß einem der vorstehenden Ansprüche, **gekennzeichnet durch** mindestens eine Stützrippe (11), die sich insbesondere entlang der Längsachse (9) erstreckt.

8. Stützkorb gemäß Anspruch 7, **gekennzeichnet durch** eine Tragplatte (10), an der die mindestens eine Stützrippe (11) angeformt ist.

9. Stützkorb gemäß Anspruch 7 oder 8, **dadurch gekennzeichnet, dass** die mindestens eine Stützrippe (11) und die Tragplatte (10) einen in einer senkrecht zur Längsachse (9) orientierten Ebene angeordneten Neigungswinkel (n) einschließen, wobei insbesondere gilt: -90° ≤ n ≤ 90°.

10. Stützkorb gemäß einem der Ansprüche 7 bis 9, **dadurch gekennzeichnet, dass** die mindestens eine Stützrippe (11) eine freie Stützkante (12) zum Stützen der Filtertasche (5) aufweist.

11. Stützkorb gemäß Anspruch 10, **dadurch gekennzeichnet, dass** die freie Stützkante (12) in einer senkrecht zur Längsachse (9) orientierten Ebene einen Mindest-Rundungsradius (rₘᵢₙ) aufweist.
